(19) **Europäisches Patentamt**
**European Patent Office**
**Office européen des brevets**

(11) **EP 2 725 685 B1**

(12) **EUROPEAN PATENT SPECIFICATION**

(45) Date of publication and mention
of the grant of the patent:
**04.10.2017 Bulletin 2017/40**

(51) Int Cl.:
*H02J 7/04* (2006.01)     *B60L 11/18* (2006.01)
*H01M 10/48* (2006.01)    *H02J 7/00* (2006.01)
*G01R 31/36* (2006.01)    *B60L 1/00* (2006.01)
*B60L 3/00* (2006.01)     *B60L 3/12* (2006.01)
*B60L 3/04* (2006.01)     *B60L 7/14* (2006.01)
*B60L 11/14* (2006.01)    *B60L 15/20* (2006.01)
*B60L 11/00* (2006.01)

(21) Application number: **11868294.7**

(22) Date of filing: **21.06.2011**

(86) International application number:
**PCT/JP2011/064112**

(87) International publication number:
**WO 2012/176275 (27.12.2012 Gazette 2012/52)**

(54) **CHARGING DEVICE FOR POWER STORAGE DEVICE AND VEHICLE MOUNTED WITH THE SAME**

LADUNGSVORRICHTUNG FÜR EINE ENERGIESPEICHERVORRICHTUNG UND FAHRZEUG, IN DEM DIESELBE MONTIERT IST

DISPOSITIF POUR CHARGER UN DISPOSITIF D'ACCUMULATEUR D'ÉNERGIE ET VÉHICULE SUR LEQUEL CELUI-CI EST MONTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.04.2014 Bulletin 2014/18**

(73) Proprietor: **TOYOTA JIDOSHA KABUSHIKI KAISHA**
**Toyota-shi, Aichi-ken, 471-8571 (JP)**

(72) Inventor: **MITSUTANI, Noritake**
**Toyota-shi,**
**Aichi-ken, 471-8571 (JP)**

(74) Representative: **Winter, Brandl, Fürniss, Hübner, Röss, Kaiser, Polte - Partnerschaft mbB Patent- und Rechtsanwaltskanzlei**
**Alois-Steinecker-Strasse 22**
**85354 Freising (DE)**

(56) References cited:
**WO-A1-2011/001609      JP-A- 8 111 909**
**JP-A- 2003 244 862      JP-A- 2003 244 862**
**JP-A- 2006 017 544      JP-A- 2006 320 069**
**JP-B1- 4 689 756         US-A1- 2010 019 729**
**US-A1- 2010 076 825**

**Description**

TECHNICAL FIELD

The present invention relates to a charging device for a power storage device and to a vehicle mounted with the same, and more specifically relates to control of charging for the vehicle in which the mounted power storage device is chargeable with externally supplied electric power.

BACKGROUND ART

Vehicles of recent interest as environmentally-friendly vehicles are those mounted with a power storage device (such as secondary battery or capacitor for example) and caused to travel by a drive force generated from electric power which is stored in the power storage device. Such vehicles include for example electric vehicles, hybrid vehicles, fuel cell vehicles, and the like. There has been proposed a technology for charging the power storage device mounted in these vehicles with a commercial power supply of high power generation efficiency.

Some hybrid vehicles, like electric vehicles, are known as having a power storage device which is chargeable with electric power fed from a power supply located externally to the vehicle (hereinafter, this power supply will also be referred to simply as "external power supply" and this form of charging will also be referred to simply as "external charging"). For example, a so-called "plug-in hybrid vehicle" is known as having a power storage device chargeable with a common household power supply through a charging cable connecting a power supply outlet provided at a house and a charging port provided at the vehicle. Thus, increase of the fuel consumption efficiency of the hybrid vehicle can be expected.

Japanese Patent Laying-Open No. 2007-178215 (PTD 1) discloses, regarding a power supply system capable of charging a secondary battery, a configuration for restricting charging current in accordance with the temperature dependency of the internal resistance of the secondary battery and estimating the state of charge (SOC) of the secondary battery, to thereby enhance the estimation accuracy for the SOC.

CITATION LIST

PATENT DOCUMENT

PTD 1: Japanese Patent Laying-Open No. 2007-178215
PTD 2: Japanese Patent Laying-Open No. 2010-058635
PTD 3: Japanese Patent Laying-Open No. 2010-035280
PTD 4: Japanese Patent Laying-Open No. 9-285029
PTD 5: Japanese Patent Laying-Open No. 2011-008593

Document US 2010/0019729 A1 describes a charging device for charging a power storage device according to the preamble of claim 1. A vehicle includes a charging unit receiving electric power from an external power source and externally charging a power storage unit. When a connector unit is coupled to the vehicle and a state ready for charging by the external power source is attained, a controller predicts degradation ratio of the power storage unit at the time point of completion of external charging based on degradation characteristic of the power storage unit in connection with SOC and battery temperature obtained in advance, and sets target state of charge of each power storage unit based on the battery temperatures so that the predicted degradation ratio does not exceed tolerable degradation ratio at the time point of completion of external charging. Then, the controller controls corresponding converters such that SOCs of power storage units attain the target states of charge.

SUMMARY OF INVENTION

TECHNICAL PROBLEM

In a vehicle for which external charging can be done, it is desired that its power storage device has been charged sufficiently at the time when the vehicle starts being driven. Meanwhile, depending on the power storage device, a high SOC state continuing for a long time may accelerate degradation of the power storage device due to some characteristics of the power storage device. Accordingly, there are vehicles having a timer charging function which works based on a scheduled time to end charging (or a scheduled time to start driving the vehicle next time) set by a user to cause the SOC to reach a full state of charge immediately before the scheduled charging end time.

It is necessary for this timer charging function to estimate as accurately as possible a charging time to be taken for charging the power storage device, in order to suppress shortage of charging at the scheduled charging end time and degradation of the power storage device that may be caused due to a high SOC state continuing for a long time after early completion of charging.

When the charging time is estimated, variations of a variety of parameters affect the estimation accuracy. The parameters may vary depending on a difference in how a user uses the vehicle, the condition of each device such as power storage device, the environment influenced by the season, and the like. When the charging time is calculated by means of a specific model formula or the like, the influences of these variations may deteriorate the estimation accuracy, which results in a possibility of shortage of charging at the scheduled charging end time, or accelerated degradation of the power storage device due to that a high SOC continues for a long time.

The present invention has been made to solve these problems, and an object of the invention is to more accurately estimate, for a vehicle for which external charging can be done, the charging time to be taken for charging a power storage device of the vehicle. The object is solved by the features of the independent claims. The dependent claims are directed to preferred embodiments of the invention.

SOLUTION TO PROBLEM

A charging device according to the present invention includes an electric power feeding device and a control device and charges a power storage device. The electric power feeding device feeds charging power to the power storage device, using electric power from a power supply. The control device sets a charging start time using an estimated charging time in accordance with a charging end time which is input by a user, and causes the electric power feeding device to perform a charging operation of charging the power storage device. The control device performs learning control for a parameter relevant to a factor which affects estimation of the charging time, and estimates the charging time using a learned value of the parameter under the learning control.

The parameter includes a parameter relevant to a state of degradation of a charging capacity of the power storage device. The parameter is determined based on a reference amount of electric power with which the power storage device in a state of charge before start of a charging operation is chargeable, and an actual amount of electric power with which the power storage device could be charged actually.

The reference amount of electric power is a variation in amount of electric power with which the power storage device is charged, between the state of charge before start of a charging operation and a theoretical charging capacity of the power storage device. The parameter is defined as a ratio of the actual amount of electric power to the reference amount of electric power. The control device estimates the charging time, using the theoretical charging capacity, the learned value of the parameter, and charging power fed from the electric power feeding device.

Preferably, the control device updates the learned value at a timing based on an end of the charging operation.

Preferably, the control device updates the learned value, using an update value acquired by multiplying, by a predetermined gain, a difference between the learned value of the parameter used for estimation of the charging time and a parameter calculated from a result of an actual charging operation.

Preferably, when an absolute value of the difference is smaller than a threshold value, the control device does not update the learned value.

Preferably, when the updated learned value is larger than an upper limit defining a predetermined allowable range, the control device sets the updated learned value to the upper limit.

Preferably, when the updated learned value is smaller than a lower limit defining a predetermined allowable range, the control device sets the updated learned value to the lower limit.

A vehicle according to the present invention includes a power storage device, a drive device, and the above charging device. The drive device is configured to generate a drive force for travel, using electric power from the power storage device.

ADVANTAGEOUS EFFECTS OF INVENTION

The present invention can more accurately estimate, for a vehicle for which external charging can be done, the charging time to be taken for charging a power storage device of the vehicle.

BRIEF DESCRIPTION OF DRAWINGS

Fig. 1 is an overall block diagram of a charging system including a vehicle according to the present embodiment.

Fig. 2 is a diagram for generally illustrating a timer charging function and for illustrating an influence on the accuracy with which a charging time is estimated.

Fig. 3 is a diagram for illustrating an influence of degradation of a power storage device on the accuracy with which a charging time is estimated.

Fig. 4 is a diagram for generally illustrating parameter learning control.

Fig. 5 is a flowchart for illustrating a process of parameter learning control for estimation of a charging time that is executed by an ECU in a first embodiment.

Fig. 6 is a diagram for illustrating an influence of a variation of the charging efficiency on the estimation accuracy for a charging time.

Fig. 7 is a flowchart for illustrating a process of parameter learning control for estimation of a charging time that is executed by an ECU in a second embodiment.

Fig. 8 is a first diagram for generally illustrating learning control for a charging time error in a third embodiment.

Fig. 9 is a second diagram for generally illustrating learning control for a charging time error in the third embodiment.

Fig. 10 is a flowchart for illustrating a process of parameter learning control for estimation of a charging time that is executed by an ECU in the third embodiment.

Fig. 11 is a diagram for illustrating an influence of a decrease of the temperature of a power storage device on the estimation accuracy for a charging time.

Fig. 12 is a diagram for generally illustrating learning control for the temperature of a power storage device in a fourth embodiment.

Fig. 13 is a flowchart for illustrating a process of learning control for the temperature of a power storage device that is executed by an ECU in the fourth embodiment.

Fig. 14 is a flowchart for illustrating a process of learning control for the temperature of a power storage device that is executed by an ECU in a modification of the fourth embodiment.

## DESCRIPTION OF EMBODIMENTS

In the following, embodiments of the present invention will be described in detail with reference to the drawings. In the drawings, the same or corresponding components are denoted by the same characters, and a description thereof will not be repeated.

[Description of Vehicle's Basic Configuration]

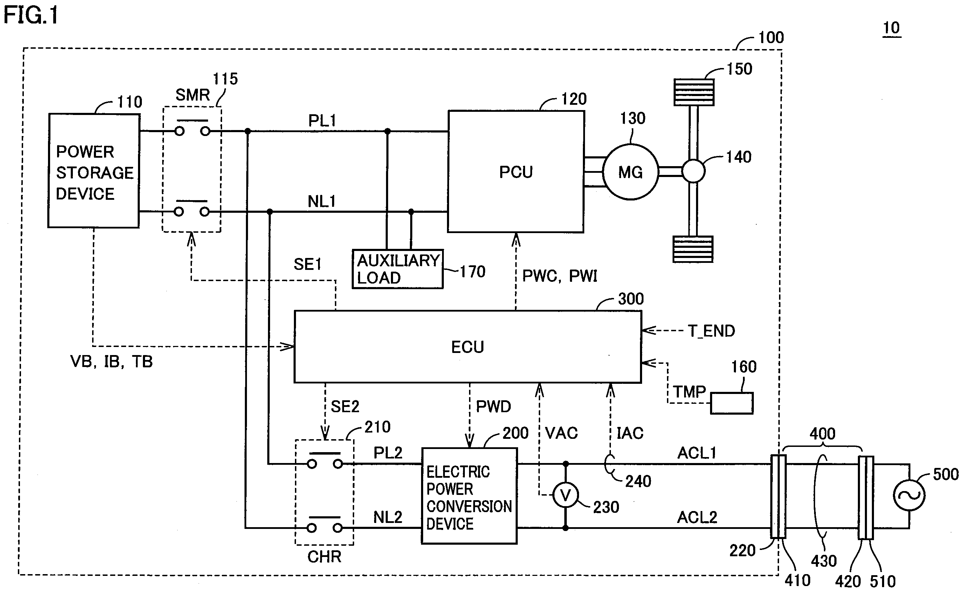

Fig. 1 is an overall block diagram of a charging system 10 including a vehicle 100 according to the present embodiment. Referring to Fig. 1, vehicle 100 includes a power storage device 110, a system main relay SMR 115, a PCU (Power Control Unit) 120 which is a drive device, a motor generator 130, a power transmission gear 140, drive wheels 150, a temperature sensor 160, an auxiliary load 170, and an ECU (Electronic Control Unit) 300 which is a control device.

Power storage device 110 is an electric power storage element configured to be chargeable and dischargeable. Power storage device 110 is configured to include a secondary battery such as lithium ion battery, nickel-metal hydride battery, lead-acid battery, or the like, or include a power storage element such as electric double layer capacitor, or the like.

Power storage device 110 is connected to PCU 120 through electric power lines PL1, NL1. Power storage device 110 supplies to PCU 120 electric power for generating a drive force for vehicle 100. Power storage device 110 also stores electric power generated by motor generator 130. The output of power storage device 110 is on the order of 200 V, for example.

Power storage device 110 is provided with a voltage sensor for detecting the voltage of power storage device 110, a current sensor for detecting an input/output current to/from power storage device 110, and a temperature sensor for detecting the temperature of power storage device 110 which, however, are not shown in the drawings. The detected values of voltage VB, current IB, and temperature TB are output to ECU 300. Based on these detected values, ECU 300 calculates the state of charge (hereinafter also referred to as SOC) of power storage device 110.

A relay included in SMR 115 is connected between power storage device 110 and electric power lines PL1, NL1. Based on a control signal SE1 from ECU 300, SMR 115 switches to supply or interrupt electric power between power storage device 110 and PCU 120.

In PCU 120, a converter, an inverter, and the like (not shown) are included. The converter is controlled by a control signal PWC from ECU 300 to convert the voltage from power storage device 110. The inverter is controlled by a control signal PWI from ECU 300 to drive motor generator 130 using electric power converted by the converter.

Motor generator 130 is an AC rotating electric machine, and is for example a permanent-magnet synchronous motor having a rotor in which permanent magnets are embedded.

The output torque of motor generator 130 is transmitted to drive wheels 150 through power transmission gear 140, which is formed by a speed reducer or power split device, to cause vehicle 100 to travel. When vehicle 100 is regeneratively braked, motor generator 130 can generate electric power from the rotational force of drive wheels 150. The electric power thus generated is converted by PCU 120 into charging power with which power storage device 110 is charged.

While Fig. 1 shows a configuration in which one pair of a motor generator and an inverter is provided, the number of motor generators and inverters is not limited to this. Two or more pairs of motor generators and inverters may alternatively be provided.

While the description regarding Fig. 1 is of an example where vehicle 100 is an electric vehicle, vehicle 100 of the present embodiment represents a vehicle mounted with a motor for generating a drive force for the vehicle, and includes, in addition to the electric vehicle, the hybrid vehicle using an engine and a motor for generating a drive force for the vehicle, the fuel cell vehicle mounted with a fuel cell, and the like.

In the case where the vehicle is a hybrid vehicle, motor generator 130 is also connected to an engine (not shown) through power transmission gear 140. ECU 300 causes the engine and motor generator 130 to operate cooperatively so that a required drive force for the vehicle can be obtained. In this case, electric power generated from rotation of the engine can also be used to charge power storage device 110.

Temperature sensor 160 detects the temperature of the air outside the vehicle. Then, temperature sensor 160 outputs the detected air temperature TMP to ECU 300.

Auxiliary load 170 is a generic term for electrical devices used for purposes other than generation of a drive force for causing vehicle 100 to travel. Auxiliary load 170 includes an air conditioner for air-conditioning the interior compartment of vehicle 100, a DC/DC converter for supplying electric power to a low-voltage system, an auxiliary battery, and low-voltage auxiliary devices such as audio device and lamp which, however, are not shown in the drawing.

Vehicle 100 further includes a configuration for charging power storage device 110 with electric power from external power supply 500, namely an inlet 220, a power conversion device 200, a charging relay CHR 210, a voltage sensor 230, and a current sensor 240. "Power conversion device 200" in the present embodiment corresponds to "electric power feeding device" of the present invention.

Inlet 220 is provided in the external surface of vehicle 100. To inlet 220, a connector 410 of charging cable 400 is connected. Electric power from external power supply 500 is transmitted to vehicle 100 through charging cable 400.

Charging cable 400 includes, in addition to connector 410, a plug 420 for connection to a receptacle 510 of external power supply 500, and an electrical wire portion 430 electrically connecting connector 410 and plug 420 to each other. Electrical wire portion 430 may include a charging circuit interrupt device (CCID) for making a switch to supply or interrupt electric power from external power supply 500.

Electric power conversion device 200 is connected to inlet 220 through electric power lines ACL1, ACL2. Electric power conversion device 200 is also connected, by electric power lines PL2, NL2, to electric power lines PL1, NL1 through charging relay CHR 210.

Electric power conversion device 200 is controlled by a control signal PWD from ECU 300 to convert AC power supplied from inlet 220 into charging power for power storage device 110.

CHR 210 is controlled by a control command SE2 from ECU 300 to make a switch to supply or shut off electric power from electric power conversion device 200 to power storage device 110.

Voltage sensor 230 is connected between electric power lines ACL1 and ACL2 to detect a voltage transmitted from external power supply 500. Then, voltage sensor 230 outputs the detected value VAC of the voltage to ECU 300.

Current sensor 240 is provided on electric power line ACL1 or electric power line ACL2 to detect current supplied from external power supply 500. Then, current sensor 240 outputs the detected value IAC of the current to ECU 300.

ECU 300 includes a CPU (Central Processing Unit), a memory, and an input/output buffer, which are not shown in Fig. 1, receives signals from respective sensors and the like, outputs control signals to respective devices, and also controls vehicle 100 and its devices each. Control of them is not limited to software-based processing, but may be performed through processing by dedicated hardware (electronic circuit).

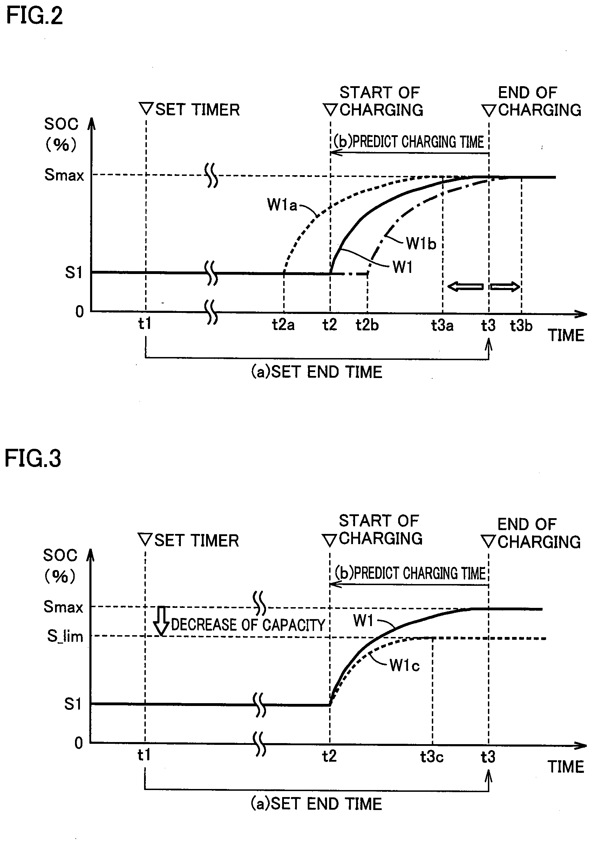

ECU 300 receives a scheduled charging end time T_END which is input through a user's operation. Then, ECU 300 performs timer charging control in such a manner that power storage device 110 reaches a full state of charge at the input scheduled charging end time T_END. Next, Fig. 2 will be used to give a general description of this timer charging control.

Referring to Figs. 1 and 2, it is supposed that the SOC of power storage device 110 before being charged is S1. At time t1, a user inputs a scheduled charging end time (t3). In response to this, ECU 300 estimates the charging time to be taken for S1 to reach Smax which is a full state of charge.

Then, ECU 300 subtracts the estimated charging time from the set scheduled charging end time t3 to calculate a charging start time t2 so that the SOC reaches Smax at time t3. After this, time passes and time t2 is reached, at which ECU 300 starts a charging operation.

At this time, if the estimation accuracy for the charging time is very high and the actual charging time is almost equal to the estimated charging time, the full state of charge is reached immediately before the set scheduled charging end time t3 as shown by a curve W1 in Fig. 2.

However, if the estimated charging time is longer than the actual charging time, charging is started from time t2a which precedes time t2. Then, as shown by a curve W1a in Fig. 2, the full state of charge is reached at time t3a before scheduled charging end time t3 is reached. Accordingly, the condition where the SOC is high continues, resulting in a possibility that degradation of power storage device 110 is accelerated.

On the contrary, if the estimated charging time is shorter than the actual charging time, the charging operation is started from time t2b which is later than time t2 as shown by a curve W1b in Fig. 2. Therefore, at scheduled charging end time t3, the full state of charge has not been reached and charging may still be insufficient.

As seen from the above, for timer charging control, the estimation accuracy for the charging time is an important factor and enhancement of this estimation accuracy for the charging time is required.

When the charging time is estimated, various factors affect the estimation accuracy. In view of this, the present embodiment enhances the estimation accuracy for the charging time, by performing learning control for a variation of each of parameters affecting the estimated charging time.

[First Embodiment]

The chargeable capacity of the power storage device tends to be gradually decreased as the power storage device is repeatedly charged and discharged over a long time or excessively discharged or charged. Accordingly, as shown in Fig. 3 for example, the power storage device can only be charged to S_lim lower than Smax which is the original full state of charge. As a result, the charging time for power storage device 110 becomes shorter (line W1c in Fig. 3) than that when power storage device 100 is normal.

If, regardless of the fact that power storage device 110 has the chargeable capacity decreased due to its degradation, the charging time is estimated on the assumption that power storage device 110 is normal as illustrated in Fig. 2 and charging is started from time t2 as shown in Fig. 3, the charging operation comes to an end at time t3c before scheduled charging end time t3 is reached. Accordingly, a high SOC of the degraded power storage device continues for a long time, resulting in a possibility that degradation of power storage device 110 is further accelerated.

In the first embodiment, each time an actual charging operation is completed, the charging capacity of power storage device 110 is learned and thereby an error in estimation of the charging time, which is caused by the decrease of the chargeable capacity resultant from degradation of power storage device 110, is compensated for.

Specifically, a ratio of the amount of electric power with which power storage device 110 is actually charged, to a variation of the amount of electric power with which power storage device 110 is charged, between the SOC of power storage device 110 before charged and a theoretical full state of charge thereof (this variation will also be referred to as "reference amount of electric power"), is adopted as a parameter relevant to degradation of power storage device 110, and this parameter is learned. Then, a learned value of this parameter is multiplied by a theoretical charging capacity of power storage device 110 to thereby calculate the charging capacity of power storage device 110 with consideration given to its degradation. The calculated charging capacity is used to estimate the charging time.

The case shown in Fig. 3 is used here as an example, and parameter CAP relevant to degradation can be calculated in accordance with formula (1).

$$CAP = \Sigma\,(IB \times VB)\,/\,\{(Smax-S1) \times \text{theoretical charging capacity}\} \ \dots\ (1)$$

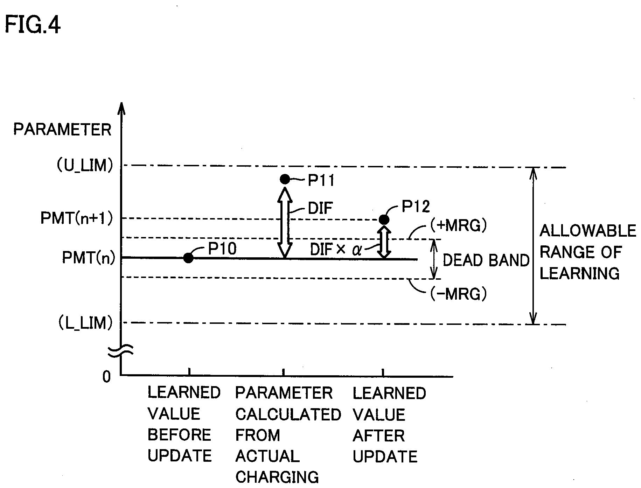

This parameter is learned in the manner as shown in Fig. 4.

Referring to Fig. 4, it is supposed that a current learned value PMT (n) of the parameter before update is point P10 and a value of the parameter that is calculated from the result of the latest charging operation is point P11.

An amount of update is determined by multiplying a difference DIF between the parameter calculated from the actual charging operation and the current learned value PMT (n), by a gain $\alpha$ ($0<\alpha<1$) indicating a ratio of reflection of learning. An updated learned value PMT (n+1) is determined by adding the determined amount of update to the current learned value PMT (n).

At this time, in order to prevent a small variation of the learned value, a dead band ($\pm$MRG) is defined relative to the current learned value PMT (n). In the case where the above difference DIF falls in the range of this dead band, it is preferable not to update the learned value.

In order to prevent, in such a case where the value detected by a sensor changes to a considerable degree due to noise or the like, a sharp and large change from the learned value before update to the learned value after update, or prevent the learned value from changing gradually but greatly over a long period of time, it is preferable to set an upper limit U_LIM and a lower limit L_LIM that define a range of an allowable variation of the learned value.

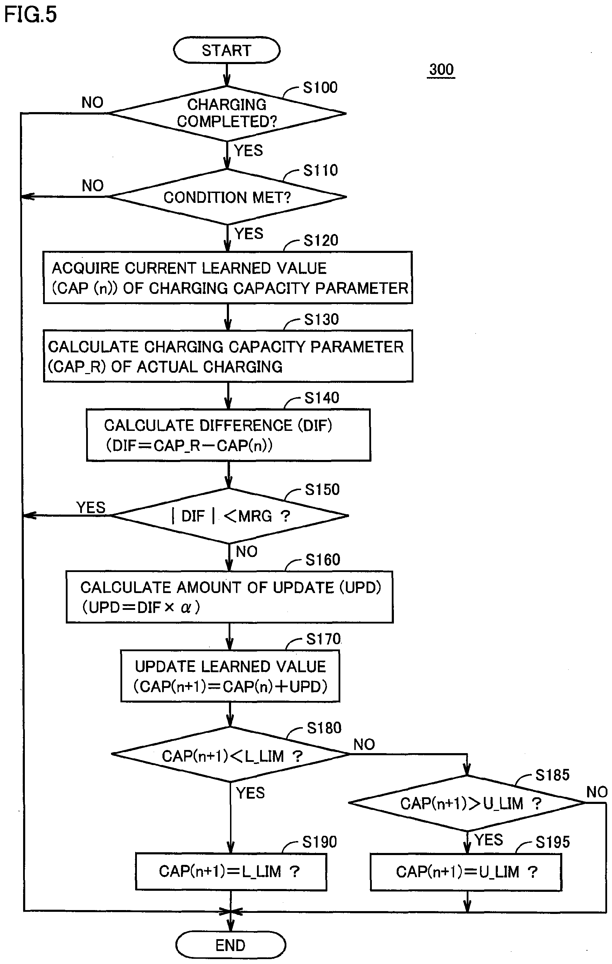

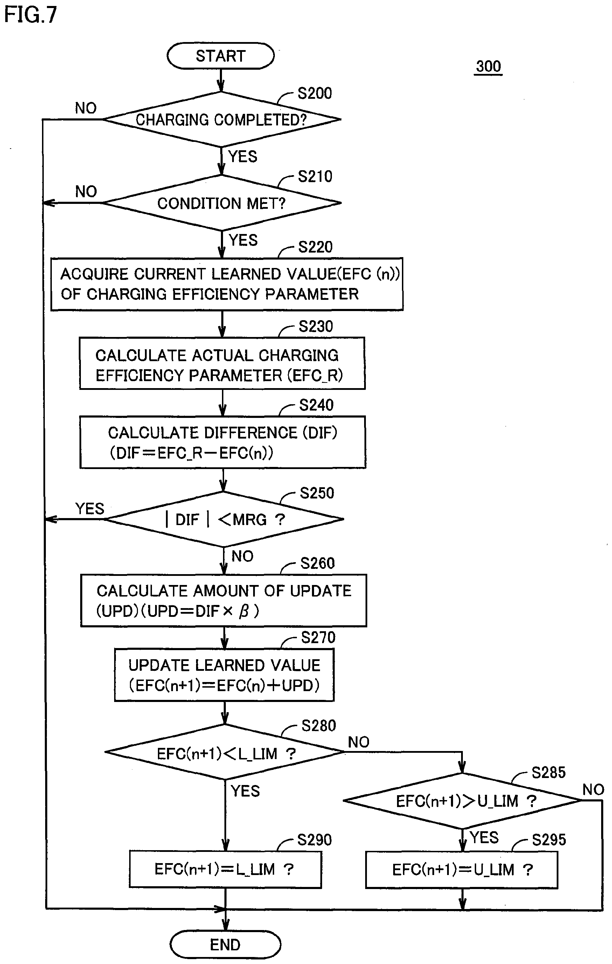

Fig. 5 is a flowchart for illustrating a process of parameter learning control for estimation of a charging time that is executed by ECU 300 in the first embodiment. The process in Fig. 5 as well as the processes in Figs. 7, 10, 13, and 14 which will be described later herein are each implemented through execution of a program stored in advance in ECU 300 in predetermined cycles. Alternatively, some steps can also be implemented by hardware (electronic circuit) constructed solely for this purpose.

Referring to Figs. 1 and 5, ECU 300 determines in step (hereinafter step will be abbreviated as S) 100, whether or not it is the timing when a charging operation is completed.

When it is not the timing when a charging operation is completed (NO in S100), ECU 300 ends the process without performing the subsequent steps.

When it is the timing when a charging operation is completed (YES in S100), the process proceeds to S110 in which ECU 300 determines whether or not other conditions for performing next parameter learning are met. The conditions include, for example, a condition that the SOC is a predetermined SOC or more (50% or more for example), and the like.

When other conditions are not met (NO in S110), ECU 300 ends the process without performing the subsequent steps. When other conditions are met (YES in S110), ECU 300 subsequently performs S120.

In S120, ECU 300 acquires a current learned value CAP (n) of parameter CAP which is relevant to degradation of the charging capacity as described above. If there is no current learned value, it is set to a predetermined initial value.

Next, ECU 300 calculates in S130 the latest parameter CAP_R using the above formula (1) based on the result of the latest charging operation. In S140, ECU 300 calculates a difference DIF between the latest parameter CAP_ R and the current learned value CAP (n).

ECU 300 determines in S150, as illustrated in Fig. 4, whether the absolute value of difference DIF calculated in S 140 is smaller than a predetermined threshold value MRG which defines a dead zone.

When the absolute value of difference DIF is smaller than threshold value MRG (YES in S150), ECU 300 stops update of the learned value and ends the process.

When the absolute value of difference DIF is threshold value MRG or more (NO in S150), the process proceeds to S160 in which ECU 300 calculates an amount of update UPD of the learned value by multiplying difference DIF by a predetermined gain $\alpha$ ($0<\alpha<1$). Then, ECU 300 calculates in S170 an updated learned value CAP (n+1), from the current learned value CAP (n) and the amount of update UPD.

After this, ECU 300 determines whether or not the updated learned value CAP (n+1) falls in an allowable range of learning, as described above in connection with Fig. 4.

Specifically, ECU 300 determines in S180 whether or not the updated learned value CAP (n+1) is smaller than lower limit L_LIM in the allowable range of learning. When the updated learned value CAP (n+1) is smaller than lower limit L_LIM (YES in S180), ECU 300 replaces the updated learned value CAP (n+1) with lower limit L_LIM(S190).

When the updated learned value CAP (n+1) is equal to or larger than lower limit L_LIM (NO in S180), ECU 300 then determines in S185 whether or not the updated learned value CAP (n+1) is larger than upper limit U_LIM and, when the updated learned value CAP (n+1) is larger than upper limit U_LIM (YES in S185), ECU 300 replaces the updated learned value CAP (n+1) with upper limit U_LIM (S195).

When the updated learned value CAP (n+1) is equal to or smaller than upper limit U_LIM (NO in S185), ECU 300 adopts the value calculated in S 170 as the updated learned value CAP (n+1).

By the learned value acquired through learning in this manner, the theoretical charging capacity of power storage device 110 is multiplied, and the value of the product is regarded as a currently chargeable capacity of power storage device 110, namely the maximum capacity of power storage device 110 with consideration given to degradation. When the next timer charging is to be done, the charging time is estimated using the following formula (2).

$$\text{estimated charging time} = \text{SOC variation} \times \text{theoretical charging capacity} \times \text{CAP}$$
$$/ \text{ supplied electric power} \dots (2)$$

Following the process as described above, control is performed to thereby enable the charging time to be estimated in consideration of decrease of the charging capacity resultant from degradation of the power storage device. Accordingly, the accuracy of the estimated time can be enhanced, and shortage of charging at a scheduled charging end time or acceleration of degradation of the power storage device due to a long continuation of a high SOC state can be suppressed.

[Second Embodiment]

In Fig. 1, it is desired that the electric power supplied from external power supply 500 be used as efficiently as possible as charging power with which power storage device 110 is charged. The actual charging efficiency, however, may change due to a secular decline of the electric power conversion efficiency of electric power conversion device 200, or due to an electric power loss caused by a change of the impedance of the electric power path from inlet 220 to power storage device 110, for example.

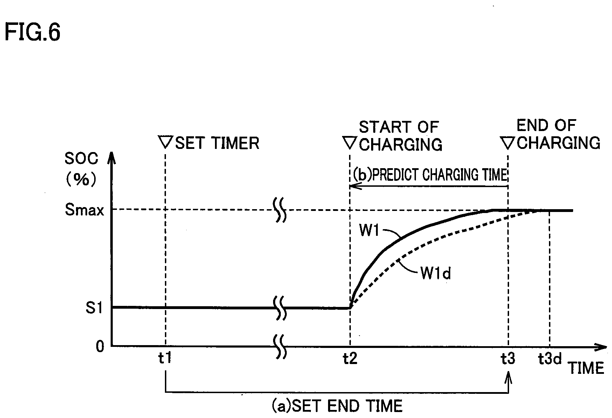

If the charging efficiency declines, the charging power actually fed to power storage device 110 decreases even if the electric power supplied from external power supply 500 is unchanged, resulting in a longer time to be taken to reach a full state of charge as indicated by a curve W1d in Fig. 6. Accordingly, when timer charging is performed, there is a higher possibility of shortage of charging at a scheduled charging end time.

In view of the above, a description will be given of a configuration in connection with a second embodiment in which learning control is performed for a secular change of the charging efficiency in a charging operation, so as to reduce the influence of the change of the charging efficiency on the estimation of the charging time.

In the second embodiment, the charging efficiency is adopted as a parameter EFC of the learning control and defined by the following formula (3).

$$EFC = (IB \times VB) \text{ / target value of charging power } ... (3)$$

Here, the target value of charging power is electric power determined by subtracting, from the rated electric power supplied from external power supply 500, the electric power normally consumed by power conversion device 200, the electric power path, and auxiliary load 170, for example, during a charging operation.

Regarding calculation of parameter EFC in formula (3), if instantaneous values are used as the terms IB and VB respectively, variations of current IB and voltage VB in a very short time excessively reflect on a learned value, resulting in a possibility of frequent variations of the learned value. Therefore, it is more preferable to use the average of current IB and the average of voltage VB (or average of IB $\times$ VB) in each specific time or in the whole charging operation, for example.

Fig. 7 is a flowchart for illustrating a process of parameter learning control for estimation of a charging time that is executed by ECU 300 in the second embodiment.

Referring to Figs. 1 and 7, ECU 300 determines in S200, whether or not it is the timing when a charging operation is completed.

When it is not the timing when a charging operation is completed (NO in S200), ECU 300 ends the process without performing the subsequent steps.

When it is the timing when a charging operation is completed (YES in S200), the process proceeds to S210 in which ECU 300 determines whether or not other conditions for performing next parameter learning are met. The conditions include, for example, a condition that the SOC is a predetermined SOC or more (50% or more for example), a condition that the charging power is predetermined charging power or more, a condition that the charging time is a predetermined charging time or more, a condition that the power consumption of auxiliary load 170 is predetermined power consumption or less, and the like.

When other conditions are not met (NO in S210), ECU 300 ends the process without performing the subsequent steps. When other conditions are met (YES in S210), ECU 300 subsequently performs S220.

In S220, ECU 300 acquires a current learned value EFC (n) of parameter EFC which is relevant to the charging efficiency as described above. If there is no current learned value, it is set to a predetermined initial value.

Next, ECU 300 calculates in S230 the latest parameter EFC_R using the above formula (3) based on the result of the latest charging operation. In S240, ECU 300 calculates a difference DIF between the latest parameter EFC_R and the current learned value EFC (n).

ECU 300 determines in S250, as illustrated in Fig. 4, whether the absolute value of difference DIF calculated in S240 is smaller than a predetermined threshold value MRG which defines a dead band.

When the absolute value of difference DIF is smaller than threshold value MRG (YES in S250), ECU 300 stops update of the learned value and ends the process.

When the absolute value of difference DIF is threshold value MRG or more (NO in S250), the process proceeds to S260 in which ECU 300 calculates an amount of update UPD of the learned value by multiplying difference DIF by a predetermined gain $\beta$ (0<$\beta$<1). Then, ECU 300 calculates in S270 an updated learned value EFC (n+1), from the current learned value EFC (n) and the amount of update UPD.

After this, ECU 300 determines whether or not the updated learned value EFC (n+1) falls in an allowable range of learning, as described above in connection with Fig. 4.

Specifically, ECU 300 determines in S280 whether or not the updated learned value EFC (n+1) is smaller than lower limit L_LIM in the allowable range of learning. When the updated learned value EFC (n+1) is smaller than lower limit L_LIM (YES in S280), ECU 300 replaces the updated learned value EFC (n+1) with lower limit L_LIM (S290).

When the updated learned value EFC (n+1) is equal to or larger than lower limit L_LIM (NO in S280), ECU 300 then determines in S285 whether or not the updated learned value EFC (n+1) is larger than upper limit U_LIM and, when the updated learned value EFC (n+1) is larger than upper limit U_LIM (YES in S285), ECU 300 replaces the updated learned value EFC (n+1) with upper limit U_LIM (S295).

When the updated learned value EFC (n+1) is equal to or smaller than upper limit U_LIM (NO in S285), ECU 300 adopts the value calculated in S270 as the updated learned value EFC (n+1).

Threshold value MRG, gain $\beta$, and upper and lower limits U_LIM, L_LIM used in Fig. 7 may not necessarily be the same as the values in the first embodiment, and different values from those of the first embodiment may be adopted.

Learned value EFC thus calculated is used to calculate the estimated charging time based on the following formula (4).

$$\text{estimated charging time} = \text{SOC variation} \times \text{theoretical charging capacity} /$$

$$(\text{target value of charging power} \times \text{EFC}) \dots (4)$$

Following the process as described above, control is performed to thereby enable the charging time to be estimated in consideration of decrease of the charging efficiency. Accordingly, the accuracy of the estimated time can be enhanced, and shortage of charging at a scheduled charging end time or acceleration of degradation of the power storage device due to a long continuation of a high SOC state can be suppressed.

[Third Embodiment]

In addition to the factors described above in connection with the first and second embodiments, a variety of factors such as seasonal variation of the air temperature while a charging operation is performed, errors in detection of various sensors, errors in calculation, for example, may cause an error in estimation of the charging time.

In view of the above, a description will be given of a configuration in connection with a third embodiment in which a difference between a charging time for which a charging operation is actually done and an estimated charging time is learned. While the configuration of the third embodiment may solely be used, it is more preferable to apply the third embodiment to an error in charging time that may still remain after application of any of other learning control processes of the first and second embodiments and that of a fourth embodiment described later herein, for example.

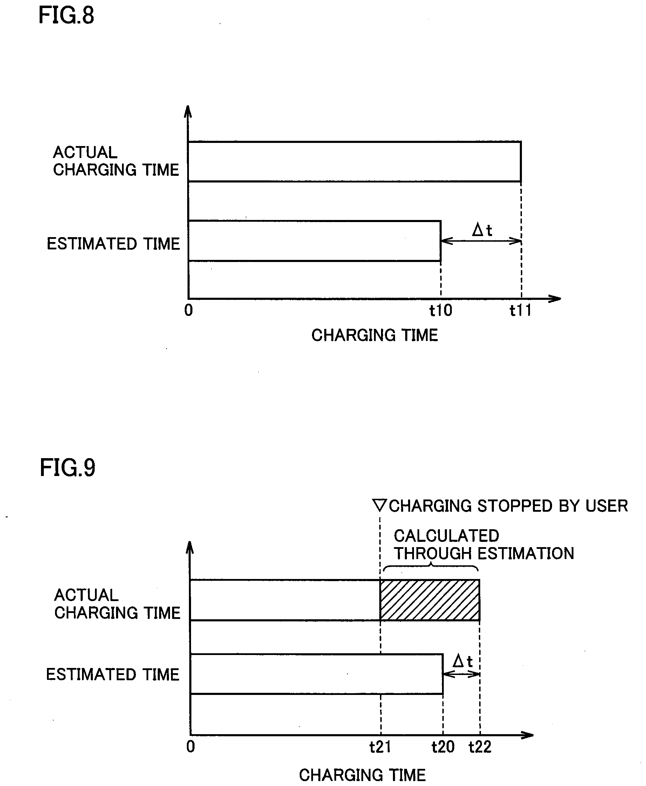

Fig. 8 is a first diagram for generally illustrating learning control for a charging time error in the third embodiment. Referring to Fig. 8, at the time when a charging operation is completed, ECU 300 calculates actual charging time t11 taken for the charging operation. Then, a difference $\Delta t$ between the actual charging time t11 and an estimated charging time t10 estimated in advance for this latest charging operation is calculated. Each time a charging operation is completed, this difference $\Delta t$ is learned, and the learned difference is reflected on estimation of the charging time.

This learning control is particularly effective in such a case where an error like an offset occurs to almost the same extent each time a charging operation is done.

In such a case where a user forces a charging operation to be stopped before power storage device 110 reaches its full state of charge, difference $\Delta t$ may be calculated in the following manner as shown in Fig. 9. Namely, the remaining charging time to be taken from the SOC when the charging operation is stopped to the full state of charge is calculated through estimation, the actual charging time (t21) and the charging time (t21 to t22) calculated through estimation are added together, the sum is regarded as the actual charging time, and difference $\Delta t$ is calculated. In this case, if the remaining charging time is considerably longer than the actual charging time having been taken at the time when the user stops the charging operation, this remaining charging time may be of a value substantially identical to the value of the initially estimated time to be compared. Thus, it is preferable to use, in combination with any of other embodiments, the estimation of the remaining charging time as shown in Fig. 9, only in the case where the actual charging time is relatively long, for example, 50% or more with respect to the overall charging time.

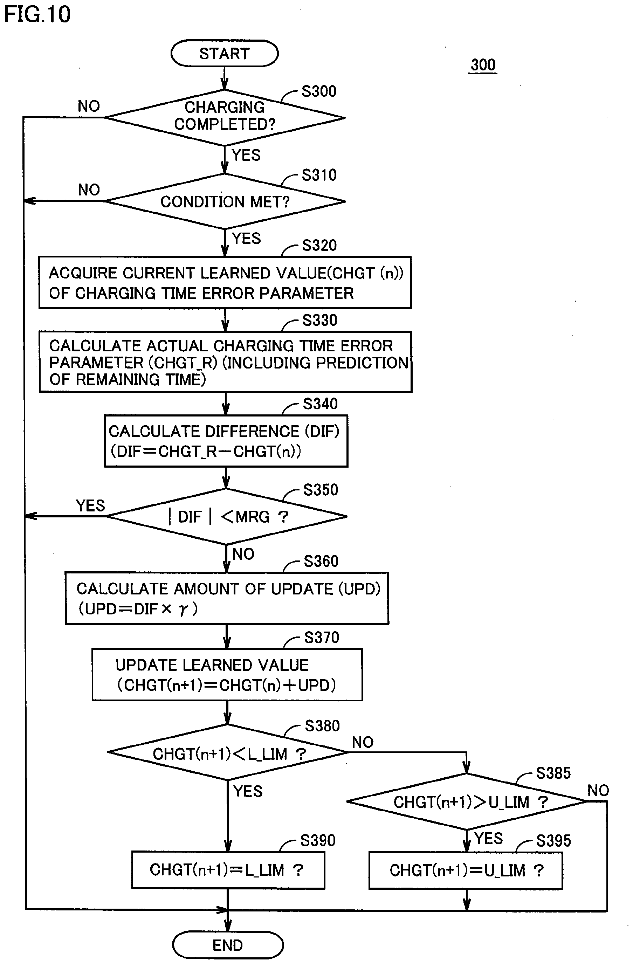

Fig. 10 is a flowchart for illustrating a process of parameter learning control for estimation of a charging time that is executed by ECU 300 in the third embodiment.

Referring to Figs. 1 and 10, ECU 300 determines in S300, whether or not it is the timing when a charging operation is completed.

When it is not the timing when a charging operation is completed (NO in S300), ECU 300 ends the process without performing the subsequent steps.

When it is the timing when a charging operation is completed (YES in S300), the process proceeds to S310 in which ECU 300 determines whether or not other conditions for performing next parameter learning are met. The conditions include, for example, a condition that the SOC is a predetermined SOC or more (50% or more for example), a condition that charging time is a predetermined charging time or more, and the like.

When other conditions are not met (NO in S310), ECU 300 ends the process without performing the subsequent steps. When other conditions are met (YES in S310), ECU 300 subsequently performs S320.

In S320, ECU 300 acquires a current learned value CHGT (n) of parameter CHGT which is relevant to the charging time error as described above. If there is no current learned value, it is set to a predetermined initial value.

Next, ECU 300 calculates in S330 the latest parameter CHGT_R based on the result of the latest charging operation as described above. In S340, ECU 300 calculates a difference DIF between the latest parameter CHGT_R and the current learned value CHGT (n).

ECU 300 determines in S350, as illustrated in Fig. 4, whether the absolute value of difference DIF calculated in S340 is smaller than a predetermined threshold value MRG which defines a dead band.

When the absolute value of difference DIF is smaller than threshold value MRG (YES in S350), ECU 300 stops update of the learned value and ends the process.

When the absolute value of difference DIF is threshold value MRG or more (NO in S350), the process proceeds to S360 in which ECU 300 calculates an amount of update UPD of the learned value by multiplying difference DIF by a predetermined gain $\gamma$ (0<$\gamma$<1). Then, ECU 300 calculates in S370 an updated learned value CHGT (n+1), from the current learned value CHGT (n) and the amount of update UPD.

After this, ECU 300 determines whether or not the updated learned value CHGT (n+1) falls in an allowable range of learning, as described above in connection with Fig. 4.

Specifically, ECU 300 determines in S380 whether or not the updated learned value CHGT (n+1) is smaller than lower limit L_LIM in the allowable range of learning. When the updated learned value CHGT (n+1) is smaller than lower limit L_LIM (YES in S380), ECU 300 replaces the updated learned value CHGT (n+1) with lower limit L_LIM (S390).

When the updated learned value CHGT (n+1) is equal to or larger than lower limit L_LIM (NO in S380), ECU 300 then determines in S385 whether or not the updated learned value CHGT (n+1) is larger than upper limit U_LIM and, when the updated learned value CHGT (n+1) is larger than upper limit U_LIM (YES in S385), ECU 300 replaces the updated learned value CHGT (n+1) with upper limit U_LIM (S395).

When the updated learned value CHGT (n+1) is equal to or smaller than upper limit U_LIM (NO in S385), ECU 300 adopts the value calculated in S370 as the updated learned value CHGT (n+1).

Threshold value MRG, gain $\gamma$, and upper and lower limits U_LIM, L_LIM used in Fig. 10 may not necessarily be the same as the values in the first and second embodiments, and different values from those of the first and second embodiments may be adopted.

Learned value CHGT thus calculated is used to calculate the estimated charging time based on the following formula (5).

$$\text{estimated charging time} = \text{SOC variation} \times \text{theoretical charging capacity} / \text{target}$$

$$\text{value of charging power} + \text{CHGT} \dots (5)$$

Following the process as described above, control is performed to thereby enable the charging time to be estimated in consideration of variation of the charging time error. Accordingly, the accuracy of the estimated time can be enhanced, and shortage of charging at a scheduled charging end time or acceleration of degradation of the power storage device due to a long continuation of a high SOC state can be suppressed.

[Fourth Embodiment]

Generally, the SOC and the temperature of the power storage device while being charged may restrict the allowable charging power. This is for the reason that a particularly high SOC and/or low temperature of the power storage device is likely to make the chemical reaction in the power storage device slow. For example, in the case of high SOC, the region in which electric power can be received is accordingly small and therefore the chemical reaction becomes slow. In the case of low temperature, the reaction rate is accordingly low and therefore the chemical reaction becomes slow.

If large electric power is supplied to the power storage device under this condition, there may be excessive electric power that cannot be used for the chemical reaction. Then, in the case for example where the power storage device is a lithium ion battery, the excessive electric power causes metal Li to precipitate, resulting in a possibility of degradation of the power storage device.

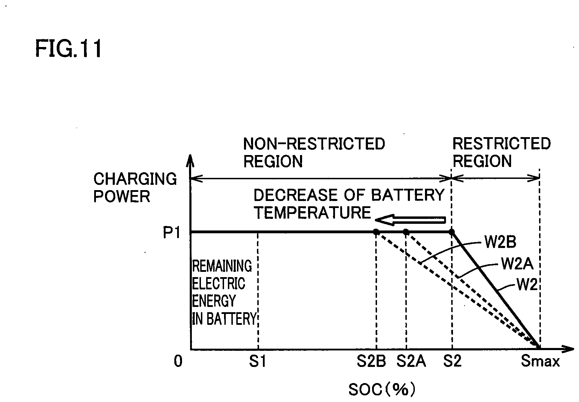

Accordingly, for charging of the power storage device, an operation as shown in Fig. 11 is performed (line W2 in Fig. 11) in such a manner that substantially constant charging power P1 is used for the region (non-restricted region) extending to a predetermined SOC (S2 in Fig. 11) and charging power smaller than P1 and appropriate for the charging characteristics of the power storage device is used for the region (restricted region) of the SOC higher than S2.

Further, as the temperature of the power storage device decreases, the SOC of the boundary between the non-restricted region and the restricted region may change to a lower SOC as indicated by broken lines W2A, W2B in Fig. 11. Thus, as the temperature of the power storage device varies while the charging operation is being performed, the restricted charging power varies as the charging operation is being proceeded with, and therefore, the temperature of the power storage device has a significant influence on estimation of the charging time. Particularly for a timer charging operation, the temperature of the power storage device at the time when a user inputs a scheduled charging end time is generally different from the temperature of the power storage device when it is actually charged. Therefore, it is necessary to appropriately set the temperature of the power storage device to be used for estimation of the charging time.

In view of the above, a description will be given of a configuration in connection with the fourth embodiment in which, particularly in order to suppress shortage of charging due to the fact that the temperature of the power storage device is estimated to be a high temperature when timer charging is performed, learning control is performed in such a manner that the temperature of the power storage device is estimated to be a safer (lower) temperature.

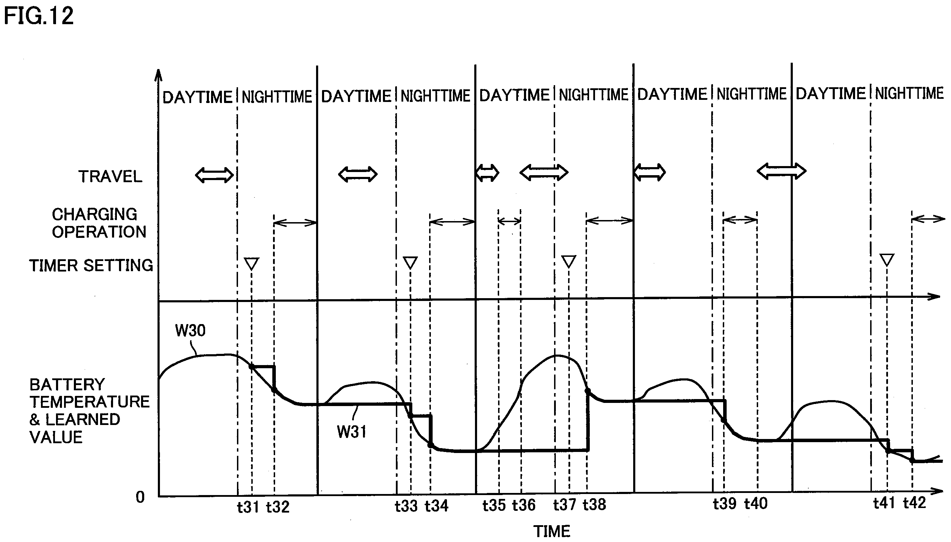

Fig. 12 is a diagram for generally illustrating learning control for the temperature of power storage device 110 in the fourth embodiment. In Fig. 12, the horizontal axis indicates the time, and the vertical axis indicates timings of vehicle's travel, charging operation, and user's timer setting, as well as transition of the temperature (W30) of power storage device 110 and learned value (W31) of the temperature. It should be noted that the temperature of power storage device 110 is representatively expressed as "battery temperature" in Fig. 12 as well as Figs. 13 and 14 described later herein.

Referring to Fig. 12, a basic concept regarding setting (update) of the learned value in the fourth embodiment will be described.

When a user sets a scheduled charging end time for a timer charging function, the actual temperature of the power storage device when the timer is set is compared with the current learned value (learned temperature), and a lower one of them is adopted as a new learned value. Namely, when the temperature of the power storage device when the timer is set is lower than the current learned value, the actual temperature of the power storage device is reflected on the learned value (time t31, t33, t41 in Fig. 12). On the contrary, when the temperature of the power storage device when the timer is set is higher than the current learned value, the learned value is not updated (t37 in Fig. 12).

In the case where timer charging is performed, at the timing that charging is started, the current temperature of the power storage device is used as the learned value (time t32, t34, t38, t42 in Fig. 12). At this time, even if the actual temperature of the power storage device is higher than the current learned value, the temperature of the power storage device is adopted as the learned value. This is for the reason that timer charging is mostly performed customarily, for example, in the middle of every night, and therefore the temperature variation between successive timer charging operations is considered as relatively small. In this way, in the case for example where the temperature seasonally increases from winter to spring and summer, the increase of the temperature of the power storage device can accordingly be reflected on the learned value. In addition, deterioration of the accuracy of the learned value in the case where timer charging is not performed for a long time can also be prevented.

While the charging operation is being performed, the temperature of the power storage device is reflected on the learned value when the actual temperature of the power storage device becomes lower than the current learned value. Namely, at the time when the charging operation is completed, the lowest temperature of the power storage device in the period from the start to the end of the charging operation is stored as the learned value.

When charging is not the timer charging operation but the one started by operation of a user (time t35, t39 in Fig. 12), the temperature of the power storage device is reflected on the learned value only when the temperature of the power storage device is lower than the learned value (t39 in Fig. 12), in order to prevent occurrence of an error in estimation as described below. Specifically, in the case for example where charging by operation of a user is performed in the daytime of high temperature or immediately after completion of travel and the temperature of the power storage device that has been increased is learned, the temperature of the power storage device may be considerably different from that when timer charging is performed, which results in occurrence of an error in estimation of the charging time.

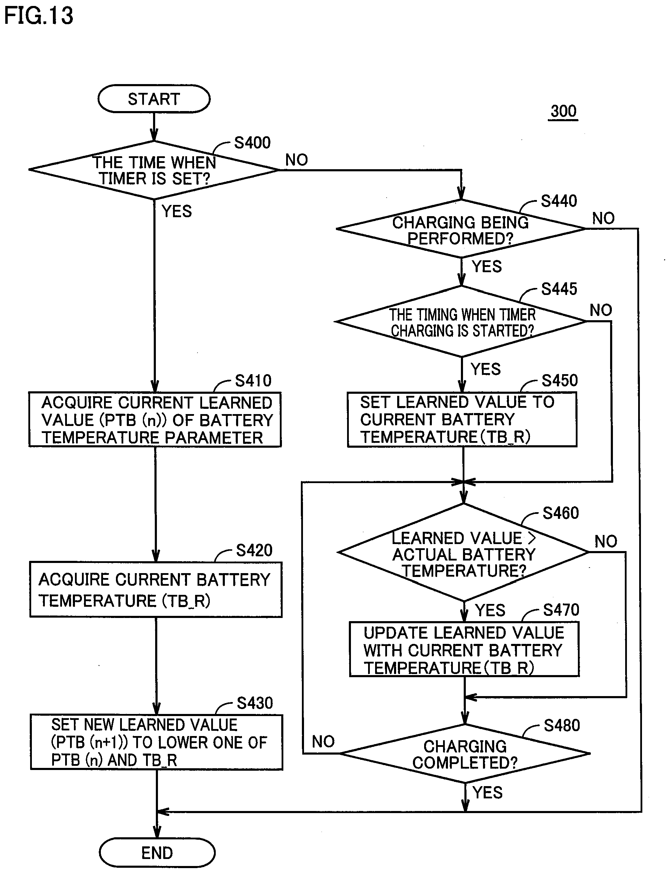

Fig. 13 is a flowchart for illustrating a process of learning control for the temperature of power storage device 110 that is executed by ECU 300 in the fourth embodiment.

Referring to Figs. 1 and 13, ECU 300 determines in S400 whether or not it is the time when a user sets a timer to a scheduled charging end time.

When it is the time when the timer is set (YES in S400), the process proceeds to S410 in which ECU 300 acquires a current learned value PTB (n) of the temperature of power storage device 110 to be used for estimation of the charging time. Then, ECU 300 acquires in S420 a current temperature TB_R of power storage device 110.

ECU 300 sets in S430 a new learned value PTB (n+1) to a lower one of the acquired learned value PTB (n) and the current temperature TB_R of power storage device 110.

Then, the learned value PTB thus set is used as the temperature of power storage device 110 when charging is performed, and the charging time is estimated.

In contrast, when it is not the time when the timer is set (NO in S400), the process proceeds to S440 in which ECU 300 determines whether or not the charging operation is being performed.

When the charging operation is not being performed (NO in S440), this is not the timing to update the learned value, and therefore ECU 300 ends the process.

When the charging operation is being performed (YES in S440), the process proceeds to S445 in which ECU 300 determines whether or not it is the timing to start a timer charging operation.

When it is the timing to start a timer charging operation (YES in S445), the process proceeds to S450 in which ECU 300 sets the learned value to the current temperature TB_R of power storage device 110, and proceeds to S460.

In contrast, when it is not the timing to start the timer charging operation (NO in S445), ECU 300 skips S450 and the process proceeds to S460.

In S460, ECU 300 compares the learned value with temperature TB_R of power storage device 110 for which the charging operation is being performed, to determine whether or not the temperature TB_R of power storage device 110 is lower than the learned value.

When the temperature TB_R is lower than the learned value (YES in S460), the process proceeds to S470 in which ECU 300 updates the learned value with the current temperature TB_R of power storage device 110. Then the process proceeds to S480.

When the temperature TB_R is equal to or higher than the learned value (NO in S460), ECU 300 maintains the current learned value, skips S470, and the process proceeds to S480.

In S480, ECU 300 determines whether or not the charging operation has been completed. Completion of the charging operation includes ending of the charging operation when a full state of charge is reached, and also includes user's stoppage of the charging operation while the charging operation is being done.

When the charging operation has not been completed (NO in S480), the process returns to S460 in which ECU 300 compares the temperature TB_R of power storage device 110 with the learned value, while performing the charging operation, and continues update of the learned value.

When the charging operation has been completed (YES in S480), ECU 300 stores the final value as the learned value PTB (n+1).

Following the process as described above, the control is performed to make it possible to set, in consideration of seasonal variation of the temperature and the like, the temperature of the power storage device which is used for estimation of the charging time and accordingly for setting of a scheduled charging end time under timer charging control. In this way, an error due to the influence of the temperature of the power storage device on estimation of the charging time can be reduced and therefore, the accuracy with which the charging time is estimated can be improved.

(Modification of the Fourth Embodiment)

In connection with the fourth embodiment above, the description has been given of the configuration in which the learned value is updated when the timer is set, based on a comparison between the current learned value PTB (n) and the actual temperature TB_R of the power storage device. However, in such a case where charging is done once in the daytime and once in the nighttime per day, namely twice per day, there is a possibility that, when charging is to be done in the nighttime, the learned value updated for the daytime charging is erroneously used as the temperature of the power storage device used to estimate the charging time of the nighttime charging. On the contrary, when charging is to be done in the daytime, there is a possibility that the learned value updated for the nighttime charging is erroneously used for the daytime charging.

Accordingly, there arises a possibility that the learned value under the condition that the temperature of the power storage device is high is used and thus the charging time is estimated to be shorter, resulting in shortage of charging at a scheduled charging end time.

In view of this, in a modification of the fourth embodiment, two learned values in the past are taken into consideration when the timer is set and the learned value is to be updated. Specifically, the lowest temperature among the actual temperature TB_R of the power storage device, and the current learned value PTB (n) and the preceding learned value PTB (n) thereof is used as a new learned value PTB (n+1).

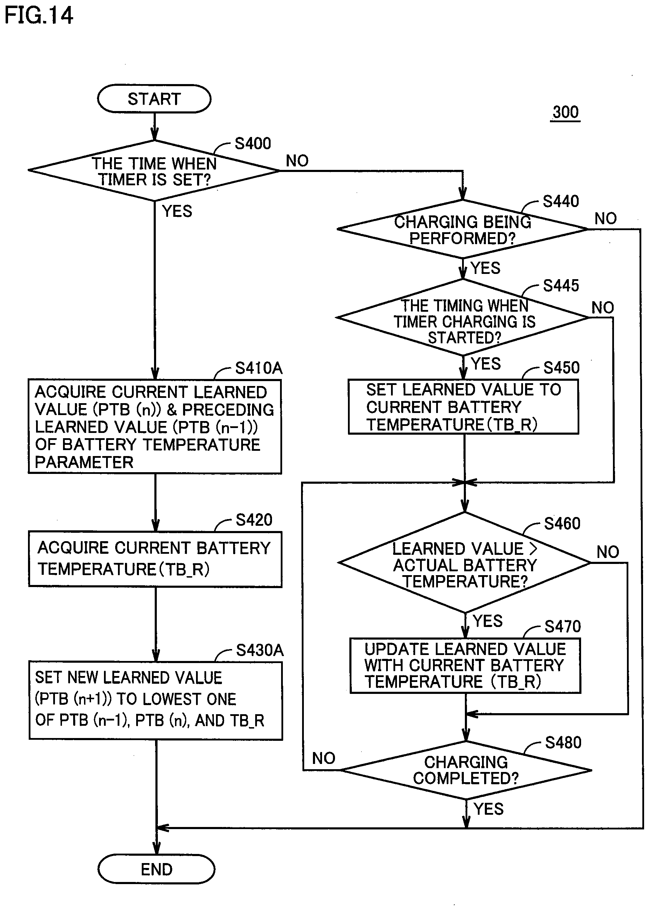

Fig. 14 is a flowchart for illustrating a process of learning control for the temperature of power storage device 110 that is executed by ECU 300 in the modification of the fourth embodiment. Fig. 14 differs from the above-described flowchart of Fig. 13 in that steps S410 and S430 are replaced with steps 410A and S430A respectively. Regarding Fig. 14, the description of the steps common to Figs. 14 and 13 will not be repeated.

Referring to Figs. 1 and 14, when it is the time to set the timer (YES in S400), the process proceeds to S410A in which ECU 300 acquires the current learned value PTB (n) and the preceding learned value PTB (n-1) of the temperature of power storage device 110 that is used for estimating the charging time. Then, ECU 300 acquires in S420 the current temperature TB_R of power storage device 110.

ECU 300 sets in S430A a new learned value PTB (n+1) to the lowest value among the acquired learned values PTB (n), PTB (n-1) and the current temperature TB_R of power storage device 110.

Learned value PTB which has been set in this way is used as the temperature of power storage device 110 when it is charged, and the charging time is accordingly estimated.

Control is carried out in accordance with the process as described above to thereby enable, even if charging is done more than once per day, the charging time to be estimated using a safer, namely lower temperature, and accordingly enable prevention of shortage of charging at the time when charging is ended.

While Fig. 14 illustrates the example where two learned values in the past are taken into consideration, more than two learned values may also be taken into consideration.

In addition, the learning control processes described above in connection with the first to fourth embodiments and the modification of the fourth embodiment may each be performed solely or any more than one process may be performed in combination.

It should be construed that embodiments disclosed herein are by way of illustration in all respects, not by way of limitation. It is intended that the scope of the present invention is defined by claims, not by the description above, and encompasses all modifications equivalent in meaning and scope to the claims.

REFERENCE SIGNS LIST

10 charging system; 100 vehicle; 110 power storage device; 115 SMR; 120 PCU; 130 motor generator; 140 power transmission gear; 150 drive wheel; 160 temperature sensor; 170 auxiliary load; 200 electric power conversion device; 210 CHR; 220 inlet; 230 voltage sensor; 240 current sensor; 400 charging cable; 410 connector; 420 plug; 430 electrical wire portion; 500 external power supply; 510 receptacle; ACL1, ACL2, PL1, PL2, NL1, NL2 electric power line

**Claims**

1. A charging device for charging a power storage device (110), comprising:

   an electric power feeding device (200) configured to feed charging power to the power storage device (110), using electric power from a power supply (500); and
   a control device (300) configured to set a charging start time using an estimated charging time in accordance with a charging end time which is input by a user, and to cause the electric power feeding device (200) to perform a charging operation of charging the power storage device (110),
   the control device (300) configured to perform learning control for a parameter relevant to a factor which affects estimation of the charging time, and to estimate the charging time using a learned value of the parameter under the learning control,
   the parameter including a parameter relevant to a state of degradation of a charging capacity of the power storage device (110), and
   the parameter being determined based on a reference amount of electric power with which the power storage device (110) in a state of charge before start of a charging operation is chargeable, and an actual amount of electric power with which the power storage device (110) is actually charged,
   **characterized in that**
   the reference amount of electric power is a variation in amount of electric power with which the power storage device (110) is charged, between the state of charge before start of a charging operation and a theoretical charging capacity of the power storage device (110),
   the parameter is defined as a ratio of the actual amount of electric power to the reference amount of electric power, and
   the control device (300) estimates the charging time, using the theoretical charging capacity, the learned value of the parameter, and charging power fed from the electric power feeding device (200).

2. The charging device according to claim 1, wherein the control device (300) updates the learned value at a timing based on an end of the charging operation.

3. The charging device according to claim 2, wherein the control device (300) updates the learned value, using an update value acquired by multiplying, by a predetermined gain, a difference between the learned value of the parameter used for estimation of the charging time and a parameter calculated from a result of an actual charging operation.

4. The charging device according to claim 3, wherein when an absolute value of the difference is smaller than a threshold value, the control device (300) does not update the learned value.

**5.** The charging device according to claim 3, wherein when the updated learned value is larger than an upper limit defining a predetermined allowable range, the control device (300) sets the updated learned value to the upper limit.

**6.** The charging device according to claim 3, wherein when the updated learned value is smaller than a lower limit defining a predetermined allowable range, the control device (300) sets the updated learned value to the lower limit.

**7.** A vehicle comprising:

a power storage device (110);
a drive device (120) configured to generate a drive force for travel, using electric power from the power storage device (110); and
the charging device according to any one of claims 1 to 6.

**Patentansprüche**

**1.** Ladevorrichtung zum Laden einer Energiespeichervorrichtung (110), die aufweist:

eine Elektroenergiezufuhrvorrichtung (200), die ausgelegt ist, der Energiespeichervorrichtung (110) unter Verwendung von elektrischer Energie von einer Energieversorgung (500) Ladeenergie zuzuführen; und
eine Steuervorrichtung (300), die ausgelegt ist, eine Ladestartzeit unter Verwendung einer geschätzten Ladezeit entsprechend einer Ladeendzeit, die von einem Nutzer eingegeben wird, einzustellen und zu bewirken, dass die Elektroenergiezufuhrvorrichtung (200) einen Ladebetrieb zum Laden der Energiespeichervorrichtung (110) durchführt,
wobei die Steuervorrichtung (300) ausgelegt ist, eine Lernsteuerung für einen Parameter, der für einen Faktor relevant ist, der eine Schätzung der Ladezeit beeinflusst, durchzuführen und die Ladezeit unter Verwendung eines gelernten Wertes des Parameters unter der Lernsteuerung zu schätzen,
wobei der Parameter einen Parameter enthält, der für einen Zustand einer Verschlechterung einer Ladekapazität der Energiespeichervorrichtung (110) relevant ist, und
wobei der Parameter auf der Grundlage einer Bezugsmenge elektrischer Energie, mit der die Energiespeichervorrichtung (110) in einem Ladungszustand vor einem Start eines Ladebetriebes ladbar ist, und einer tatsächlichen Menge elektrischer Energie, mit der die Energiespeichervorrichtung (110) tatsächlich geladen wird, bestimmt wird,
**dadurch gekennzeichnet, dass**
die Bezugsmenge elektrischer Energie eine Änderung einer Menge elektrischer Energie, mit der die Energiespeichervorrichtung (110) geladen wird, zwischen dem Ladungszustand vor einem Start eines Ladebetriebs und einer theoretischen Ladekapazität der Energiespeichervorrichtung (110) ist,
der Parameter als ein Verhältnis der tatsächlichen Menge elektrischer Energie zu der Bezugsmenge elektrischer Energie definiert ist, und
die Steuervorrichtung (300) die Ladezeit unter Verwendung der theoretischen Ladekapazität, des gelernten Wertes des Parameters und einer Ladeenergie, die von der Elektroenergiezufuhrvorrichtung (200) zugeführt wird, schätzt.

**2.** Ladevorrichtung nach Anspruch 1, wobei die Steuervorrichtung (300) den gelernten Wert zu einem Zeitpunkt aktualisiert, der auf einem Ende des Ladebetriebs basiert.

**3.** Ladevorrichtung nach Anspruch 2, wobei die Steuervorrichtung (300) den gelernten Wert unter Verwendung eines Aktualisierungswertes aktualisiert, der durch Multiplizieren einer Differenz zwischen dem gelernten Wert des Parameters, der zur Schätzung der Ladezeit verwendet wird, und einem Parameter, der aus einem Ergebnis eines tatsächlichen Ladebetriebs berechnet wird, mit einer vorbestimmten Verstärkung erlangt wird.

**4.** Ladevorrichtung nach Anspruch 3, wobei die Steuervorrichtung (300) den gelernten Wert nicht aktualisiert, wenn ein Absolutwert der Differenz kleiner als ein Schwellenwert ist.

**5.** Ladevorrichtung nach Anspruch 3, wobei die Steuervorrichtung (300) den aktualisierten gelernten Wert auf eine obere Grenze einstellt. wenn der aktualisierte gelernte Wert größer als die obere Grenze ist, die einen vorbestimmten erlaubten Bereich definiert.

**6.** Ladevorrichtung nach Anspruch 3, wobei die Steuervorrichtung (300) den aktualisierten gelernten Wert auf eine untere Grenze einstellt. wenn der aktualisierte gelernte Wert kleiner als die untere Grenze ist, die einen vorbestimmten erlaubten Bereich definiert.

**7.** Fahrzeug, das aufweist:

eine Energiespeichervorrichtung (110);
eine Antriebsvorrichtung (120), die ausgelegt ist, eine Antriebskraft zur Fahrt unter Verwendung von elektrischer Energie von der Energiespeichervorrichtung (110) zu erzeugen; und
die Ladevorrichtung nach einem der Ansprüche 1 bis 6.

**Revendications**

**1.** Dispositif de chargement destiné à charger un dispositif de stockage de puissance (110), comprenant :

un dispositif d'alimentation de puissance électrique (200) configuré pour fournir une puissance de chargement au dispositif de stockage de puissance (110), en utilisant une puissance électrique provenant d'une alimentation de puissance (500) ; et
un dispositif de commande (300) configuré pour régler une heure de début de chargement en utilisant un temps de chargement estimé selon une heure de fin de chargement qui est fournie en entrée par un utilisateur, et pour amener le dispositif d'alimentation de puissance électrique (200) à effectuer une opération de chargement pour charger le dispositif de stockage de puissance (110),
le dispositif de commande (300) étant configuré pour effectuer une commande d'apprentissage pour un paramètre associé à un facteur qui influence l'estimation du temps de chargement, et pour estimer le temps de chargement en utilisant une valeur apprise du paramètre sous la commande d'apprentissage,
le paramètre comprenant un paramètre associé à un état de dégradation d'une capacité de chargement du dispositif de stockage de puissance (110), et
le paramètre étant déterminé sur la base d'une quantité de puissance électrique de référence avec laquelle le dispositif de stockage de puissance (110) peut être chargé dans un état de charge précédant le début d'une opération de chargement, et une quantité de puissance électrique réelle avec laquelle le dispositif de stockage de puissance (110) est réellement chargé,
**caractérisé en ce que**
la quantité de puissance électrique de référence est une variation de la quantité de puissance électrique avec laquelle le dispositif de stockage de puissance (110) est chargé, entre l'état de charge précédant le début d'une opération de chargement et une capacité de chargement théorique du dispositif de stockage de puissance (110),
le paramètre est défini comme un rapport de la quantité de puissance électrique réelle à la quantité de puissance électrique de référence, et
le dispositif de commande (300) estime le temps de chargement en utilisant la capacité de chargement théorique, la valeur apprise du paramètre, et la puissance de chargement fournie à partir du dispositif d'alimentation de puissance électrique (200).

**2.** Dispositif de chargement selon la revendication 1, dans lequel le dispositif de commande (300) met à jour la valeur apprise à un moment basé sur la fin d'une opération de chargement.

**3.** Dispositif de chargement selon la revendication 2, dans lequel le dispositif de commande (300) met à jour la valeur apprise en utilisant une valeur de mise à jour obtenue en multipliant par un gain prédéterminé une différence entre la valeur apprise du paramètre utilisé pour l'estimation du temps de chargement et un paramètre calculé à partir d'un résultat d'une opération de chargement réelle.

**4.** Dispositif de chargement selon la revendication 3, dans lequel le dispositif de commande (300) ne met pas à jour la valeur apprise quand une valeur absolue de la différence est inférieure à une valeur de seuil.

**5.** Dispositif de chargement selon la revendication 3, dans lequel le dispositif de commande (300) règle la valeur apprise mise à jour à la limite supérieure quand la valeur apprise mise à jour est supérieure à une limite supérieure définissant une plage acceptable prédéterminée.

**6.** Dispositif de chargement selon la revendication 3, dans lequel le dispositif de commande (300) règle la valeur apprise mise à jour à la limite inférieure quand la valeur apprise mise à jour est inférieure à une limite inférieure définissant une plage acceptable prédéterminée.

7. Véhicule comprenant :

   un dispositif de stockage de puissance (110) ;
   un dispositif d'entraînement (120) configuré pour générer une force d'entraînement pour se déplacer, utilisant une puissance électrique provenant du dispositif de stockage de puissance (110) ; et
   le dispositif de chargement selon l'une quelconque des revendications 1 à 6.

FIG.1

EP 2 725 685 B1

## FIG.2

## FIG.3

FIG.4

FIG.5

```
                    ┌──────────────┐
                    │    START     │
                    └──────┬───────┘
                           │                        300
         NO         ╱──────┴──────╲  ⌐S100
    ┌───────────────   CHARGING    
    │               ╲  COMPLETED? ╱
    │                ╲───────────╱
    │                    │ YES
    │                    │           ⌐S110
    │  NO          ╱─────┴─────╲
    │←─────────────  CONDITION  
    │              ╲   MET?    ╱
    │               ╲─────────╱
    │                   │ YES   ⌐S120
    │         ┌─────────┴──────────────────────┐
    │         │ ACQUIRE CURRENT LEARNED VALUE   │
    │         │ (CAP (n)) OF CHARGING CAPACITY  │
    │         │ PARAMETER                       │
    │         └─────────┬──────────────────────┘
    │                   │            ⌐S130
    │         ┌─────────┴──────────────────────┐
    │         │ CALCULATE CHARGING CAPACITY     │
    │         │ PARAMETER (CAP_R) OF ACTUAL     │
    │         │ CHARGING                        │
    │         └─────────┬──────────────────────┘
    │                   │            ⌐S140
    │         ┌─────────┴──────────────────────┐
    │         │ CALCULATE DIFFERENCE (DIF)      │
    │         │ (DIF=CAP_R−CAP(n))              │
    │         └─────────┬──────────────────────┘
    │                   │            ⌐S150
    │   YES        ╱────┴─────╲
    │←─────────────  |DIF|<MRG ? 
    │              ╲──────────╱
    │                   │ NO        ⌐S160
    │         ┌─────────┴──────────────────────┐
    │         │ CALCULATE AMOUNT OF UPDATE (UPD)│
    │         │ (UPD=DIF×α)                     │
    │         └─────────┬──────────────────────┘
    │                   │            ⌐S170
    │         ┌─────────┴──────────────────────┐
    │         │ UPDATE LEARNED VALUE            │
    │         │ (CAP(n+1)=CAP(n)+UPD)           │
    │         └─────────┬──────────────────────┘
    │                   │            ⌐S180
    │            ╱──────┴──────╲    NO
    │           ╲ CAP(n+1)<L_LIM ?├────────────┐
    │            ╲─────────────╱                │
    │                 │ YES                      │ ⌐S185
    │                 │               ╱──────────┴──────╲  NO
    │                 │              ╲ CAP(n+1)>U_LIM ? ├───┐
    │                 │               ╲────────────────╱    │
    │                 │         ⌐S190      │ YES  ⌐S195      │
    │         ┌───────┴─────────┐    ┌─────┴──────────┐     │
    │         │ CAP(n+1)=L_LIM ?│    │ CAP(n+1)=U_LIM?│     │
    │         └───────┬─────────┘    └─────┬──────────┘     │
    │                 │                    │                 │
    └─────────────────┼────────────────────┴─────────────────┘
                      │
                ┌─────┴──────┐
                │    END     │
                └────────────┘
```

## FIG.6

FIG.7

```
                    ┌─────────────┐
                    │    START    │
                    └──────┬──────┘
                           │            300
                           ▼      ┌─S200
           NO  ╱─────────────────────╲
      ◄───────┤  CHARGING COMPLETED?  │
              ╲─────────────────────╱
                           │ YES
                           ▼      ┌─S210
           NO  ╱─────────────────────╲
      ◄───────┤     CONDITION MET?    │
              ╲─────────────────────╱
                           │ YES
                           ▼      ┌─S220
        ┌─────────────────────────────────────┐
        │ ACQUIRE CURRENT LEARNED VALUE(EFC(n))│
        │  OF CHARGING EFFICIENCY PARAMETER    │
        └──────────────────┬──────────────────┘
                           ▼      ┌─S230
        ┌─────────────────────────────────────┐
        │     CALCULATE ACTUAL CHARGING        │
        │   EFFICIENCY PARAMETER (EFC_R)       │
        └──────────────────┬──────────────────┘
                           ▼      ┌─S240
        ┌─────────────────────────────────────┐
        │      CALCULATE DIFFERENCE (DIF)      │
        │        (DIF=EFC_R−EFC(n))            │
        └──────────────────┬──────────────────┘
                           ▼      ┌─S250
       YES  ╱─────────────────────╲
      ◄─────┤      | DIF | <MRG ?   │
            ╲─────────────────────╱
                           │ NO
                           ▼      ┌─S260
        ┌─────────────────────────────────────┐
        │    CALCULATE AMOUNT OF UPDATE        │
        │       (UPD)(UPD=DIF×β)               │
        └──────────────────┬──────────────────┘
                           ▼      ┌─S270
        ┌─────────────────────────────────────┐
        │       UPDATE LEARNED VALUE           │
        │     (EFC(n+1)=EFC(n)+UPD)            │
        └──────────────────┬──────────────────┘
                           ▼      ┌─S280
            ╱─────────────────────╲  NO
            ┤    EFC(n+1)<L_LIM ?   ├─────────┐
            ╲─────────────────────╱           ▼      ┌─S285
                           │ YES       ╱─────────────────╲  NO
                           │           ┤  EFC(n+1)>U_LIM ? ├──┐
                           │           ╲─────────────────╱   │
                           │                  │ YES  ┌─S295   │
                           ▼   ┌─S290          ▼               │
        ┌──────────────────────┐   ┌──────────────────────┐  │
        │  EFC(n+1)=L_LIM ?     │   │   EFC(n+1)=U_LIM ?    │  │
        └──────────┬───────────┘   └──────────┬───────────┘  │
                   │                           │              │
                   └───────────┬───────────────┴──────────────┘
                               ▼
                        ┌─────────────┐
                        │     END     │
                        └─────────────┘
```

## FIG.8

## FIG.9

FIG.10

# FIG.11

# FIG.12

EP 2 725 685 B1

## FIG.13

FIG.14

```
                    ( START )                                        300

                        │
                        ▼
                 ◇ S400                          ◇ S440
        ╱ THE TIME WHEN ╲   NO          ╱  CHARGING BEING  ╲   NO
       ◇   TIMER IS SET?  ◇──────────▶◇    PERFORMED?      ◇─────┐
        ╲               ╱              ╲                  ╱       │
                │ YES                       │ YES                │
                │                           ▼                    │
                │                    ◇ S445                      │
                │           ╱  THE TIMING WHEN  ╲   NO           │
                │          ◇ TIMER CHARGING IS    ◇───────┐      │
                │           ╲    STARTED?        ╱         │      │
                │                │ YES   S450              │      │
                ▼                ▼                         │      │
         S410A          ┌──────────────────┐              │      │
  ┌──────────────────┐  │ SET LEARNED VALUE TO            │      │
  │ACQUIRE CURRENT    │  │ CURRENT BATTERY  │              │      │
  │LEARNED VALUE      │  │ TEMPERATURE(TB_R)│              │      │
  │(PTB (n)) & PRECEDING└──────────────────┘              │      │
  │LEARNED VALUE (PTB(n-1))      │◀────────────────────────┘      │
  │OF BATTERY TEMPERATURE        ▼                                │
  │PARAMETER          │   ◇ S460                                  │
  └──────────────────┘  ╱ LEARNED VALUE >  ╲   NO                 │
                │      ◇  ACTUAL BATTERY     ◇────────┐           │
                ▼       ╲  TEMPERATURE?     ╱         │           │
         S420                │ YES  S470              │           │
  ┌──────────────────┐       ▼                        │           │
  │ACQUIRE CURRENT    │ ┌──────────────────┐          │           │
  │BATTERY            │ │UPDATE LEARNED VALUE          │           │
  │TEMPERATURE(TB_R)  │ │WITH CURRENT BATTERY          │           │
  └──────────────────┘ │TEMPERATURE (TB_R)│           │           │
                │      └──────────────────┘           │           │
                │             │◀─────────────────────┘           │
                ▼             ▼                                    │
         S430A         ◇ S480                                     │
  ┌──────────────────┐ ╱  CHARGING  ╲   NO                        │
  │SET NEW LEARNED    ◇  COMPLETED?   ◇──┐                        │
  │VALUE             │ ╲            ╱    │                        │
  │(PTB (n+1)) TO LOWEST ONE │ YES       │                        │
  │OF PTB (n-1), PTB (n), AND TB_R       │                        │
  └──────────────────┘       │           │                        │
                │            │◀──────────┘                        │
                │◀───────────┴─────────────────────────────────────┘
                ▼
             ( END )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007178215 A
- JP 2010058635 A
- JP 2010035280 A
- JP 9285029 A
- JP 2011008593 A
- US 20100019729 A1